(19) Europäisches Patentamt
European Patent Office
Office européen des brevets

(11) Veröffentlichungsnummer: **0 219 080**
**B1**

(12) # EUROPÄISCHE PATENTSCHRIFT

(45) Veröffentlichungstag der Patentschrift: **14.03.90**

(21) Anmeldenummer: **86114096.0**

(22) Anmeldetag: **11.10.86**

(51) Int. Cl.[5]: **C 09 B 62/513,**
C 09 B 62/453, D 06 P 1/384

(54) **Wasserlösliche Disazoverbindungen, Verfahren zu deren Herstellung und ihre Verwendung als Farbstoffe.**

(30) Priorität: **15.10.85 DE 3536688**

(43) Veröffentlichungstag der Anmeldung:
**22.04.87 Patentblatt 87/17**

(45) Bekanntmachung des Hinweises auf die Patenterteilung:
**14.03.90 Patentblatt 90/11**

(84) Benannte Vertragsstaaten:
**CH DE FR GB IT LI**

(56) Entgegenhaltungen:
**EP-A-0 126 026**
**EP-A-0 133 283**
**EP-A-0 149 170**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Schläfer, Ludwig, Dr.**
**Königsberger Strasse 40**
**D-6233 Kelkheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung liegt auf dem technischen Gebiet der faserreactiven Farbstoffe.

Aus der US-Patentschrift 4 425 270 sind Disazofarbstoffe bekannt, die im Ausziehverfahren auf Cellulosefasern, erst ab Färbetemperaturen von 70°C, d.h. erst bei relativ hohen Färbetemperaturen eines Ausziehverfahrens, eine befriedigende Farbausbeute zeigen. Sie sind somit nur beschränkt anwendbar, und ihre Anwendung ist mit einem hohen Maß an Unsicherheit bei der Reproduzierbarkeit von Färbungen verbunden, wenn der optimale Temperaturbereich von etwa 70 bis 80°C nicht sicher eingehalten werden kann. Gleiches gilt für in den europäischen Patentanmeldungs-Veröffentlichungen Nrs. 0 022 265A und 0 114 032A beschriebene Farbstoffe.

Desweiteren sind aus der europäischen Patentanmeldungs-Veröffentlichung Nr. 0 133 283A Disazofarbstoffe bekannt, die zwar wertvolle faserreaktive Farbstoffe darstellen, die jedoch bezüglich ihres Fixiergrades auf Cellulosefasermaterialien im Ausziehverfahren sowie in der Eigenschaft, möglichst gleich farbstarke Färbungen unabhängig von der Färbetemperatur in einem Bereich von 40 bis 80°C zu liefern, verbesserungswürdig erscheinen.

Gleiches gilt für faserreaktive Farbstoffe aus der europäischen Patentanmeldungs-Veröffentlichung Nr. 0 149 170A, die ebenfalls aus der bivalenten Kupplungskomponente 1-Amino-8-naphthol-3,6- oder -4,6-disulfonsäure und zwei Anilin-Diazokomponenten mit jeweils einer faserreaktiven Gruppierung des Vinylsulfon-Typs aufgebaut sind, wobei eine der Diazokomponenten zusätzlich eine Sulfogruppe enthält. Insbesondere zeigt der Farbstoff des Beispieles 79 der europäischen Patentanmeldungs- Veröffentlichung Nr. 0 126 026A, der neben der faserreaktiven Gruppe des Vinylsulfon-Typs eine Brom-acrylsäureamid-Gruppe als zusätzliche faserreaktive Gruppe enthält, ein sehr unterschiedliches und unbefriedigendes Färbeverhalten im Temperaturbereich zwischen 40 und 80°C.

Mit der vorliegenden Erfindung wurden nunmehr neue, wertvolle, waserlöslich disazoverbindungen gefunden, die sich sehr gut als faserreaktive Farbstoffe eignen und insbesondere Färbungen in sehr guter und konstanter Farbausbeute aus Cellulosefasermaterialien bei der Anwendung nach dem Ausziehverfahren, selbst über den sehr weiten Temperaturbereich von 30 bis 80°C, liefern.

Diese erfindungsgemäßen Disazoverbindungen entsprechen der allgemeinen Formel (1)

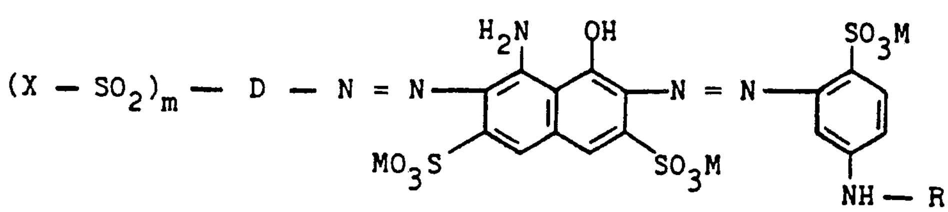

(1)

in welcher bedeuten:

D ist ein Benzolring oder ein Naphthalinring, die beide durch Substituenten aus der Gruppe Chlor, Brom, Alkyl von 1 bis 4 C-Atomen, wie Ethyl und hiervon insbesondere Methyl, Alkoxy von 1 bis 4 C-Atomen, wie Ethoxy und hiervon insbesondere Methoxy, Carboxy und Sulfo substituiert sein können;

X ist die Vinylgruppe oder eine β-Sulfatoethyl-Gruppe;

R ist eine 3-(β-Chlorethylsulfonyl)-benzoyl-, 4-(β-Chlorethylsulfonyl)-benzoyl-, 3-(β-Chlorethylsulfonyl-methyl)-benzoyl-, 4-(β-Chlorethylsulfonyl-methyl)-benzoyl-, 4-(β-Chlorethylsulfonyl)-cinnamoyl-, 3-(N-Methyl-N-β-chlorethylsulfonyl)-aminobenzoyl- oder 4-(N-Methyl-N-β-chlorethylsulfonyl)-aminobenzoyl-Gruppe;

m ist die Zahl 1 oder 2,

M ist ein Wasserstoffatom oder ein Alkalimetall, wie Natrium, Kalium oder Lithium.

Der Formelrest $(X—SO_2)_m—D—$ ist bevorzugt eine Gruppe der allgemeinen Formel (2) oder (3)

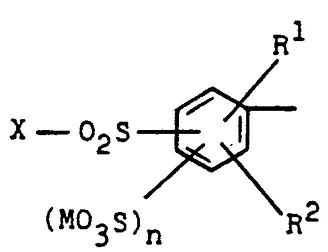

(2)

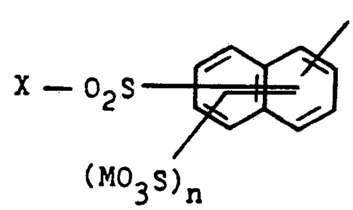

(3)

in welchen

$R^1$ und $R^2$ zueinander gleich oder voneinander verschieden sein können und

$R^1$ Wasserstoff, Methyl, Methoxy, Ethoxy, Carboxy, Chlor oder Brom ist,

$R^2$ für Wasserstoff, Methyl, Methoxy, Ethoxy oder Chlor steht,

n für die Zahl Null oder 1 steht (wobei im Falle n gleich Null diese Gruppe ein Wasserstoffatom bedeutet) und

M und X die obengenannten Bedeutungen besitzen.

$R^1$ und $R^2$ können zueinander gleich oder voneinander verschieden sein. Bevorzugt sind sie ein Wasserstoffatom oder eine Methoxygruppe.

Bevorzugt ist weiterhin R eine 3-(β-Chlorethylsulfonyl)-benzoyl-, 4-(β-Chlorethylsulfonylmethyl)-benzoyl- oder 4-(N-Methyl-N-β-chlorethylsulfonyl)-amino-benzoyl-Gruppe.

Eine Sulfogruppe ist eine Gruppe der allgemeinen Formel $—SO_3M$, eine Carboxygruppe eine Gruppe der allgemeinen Formel —COOM und eine Sulfatogruppe eine Gruppe der allgemeinen Formel $—OSO_3M$, wobei in diesen formeln M eine der obengenannten Bedeutungen besitzt.

Die erfindungsgemäßen Disazoverbindungen können in Form ihrer freien Säure und in Form ihrer Alkalimetallsalz vorliegen. Sie finden bevorzugt in form dieser Salz ihre Verwendung zum Färben oder Bedrucken von hydroxy- und/oder carbonamidgruppenhaltigem Fasermaterial.

Die vorliegende Erfindung betrifft weiterhin eine Verfahren zur Herstellung dieser erfindungsgemäßen Disazoverbindungen, das dadurch gekennzeichnet, ist, daß man eine Monoazoverbindung der allgemeinen Formel (4)

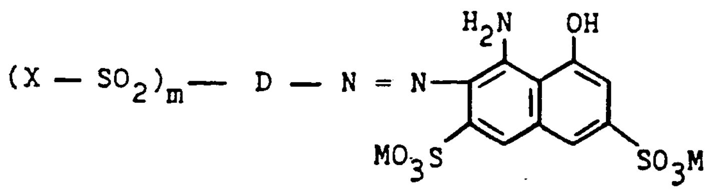

(4)

in welcher m, D, M und X die obengenannten Bedeutungen haben, mit der Diazoniumverbindung eines aromatischen Amins der allgemeinen Formel (5)

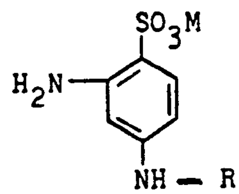

(5)

in welcher M und R die obengenannten Bedeutungen haben, kuppelt.

Die Kupplungsreaktion erfolgt analog bekannten Verfahrensweisen, beispielsweise im wäßrigen Medium im schwach sauren bis schwach alkalischen Bereich, vorzugsweise bei einem pH-Wert zwischen 3 und 8, insbesondere zwischen 4 und 7, und bei einer Temperatur zwischen 5 und 30°C, bevorzugt zwischen 10 und 25°C.

Die erfindungsgemäßen Disazoverbindungen können aber auch in erfindungsgemäßer Weise in einer sogenannten Eintopfreaktion hergestellt werden. Diese stellt eine vorteilhafte Verfahrensweise dar, da sie auf die Isolierung der Zwischenstufen, wie insbesondere der Monoazoverbindung der allgemeinen Formel (4), verzichtet. Das Arbeiten nach dem eintopfverfahren ist deshalt möglich, weil in dieser Eintopfreaktion die Verbindung der allgemeinen Formel (1) in überraschender Weise bevorzugt gebildet wird. Die vorliegende Erfindung betrifft somit auch ein Verfahren zur Herstellung einer erfindungsgemäßen Disazoverbindung der allgemeinen Formel (1), das dadurch gekennzeichnet ist, daß man zwei diazotierte aromatische Amine der allgemeinen Formel (5) und der allgemeinen Formel (6)

$$(X—SO_2)_m—D—NH_2 \qquad (6)$$

mit m, D und X der obengenannten Bedeutung in äquivalenter Menge mit 1-Amino-8-naphthol-3,6-disulfonsäure als bivalenter Kupplungskomponente im Gemisch in vorzugsweise wäßrigem Medium zunächst bei einem pH-Wert zwischen 0 und 3, vorzugsweise zwischen 1 und 2, und anschließend bei einem pH-Wert zwischen 3,5 und 8, vorzugsweise zwischen 4 und 7, umsetzt; die Reaktionstemperatur beider Kupplungsschritte liegt zwischen 0 und 30°C, vorzugsweise zwischen 5 und 25°C.

Die Monoazoverbindungen entsprechend der allgemeinen Formel (4) sind bekannt; sie lassen sich analog bekannten Verfahrensweisen durch Umsetzung des Diazoniumsalzes eines aromatischen Amins der allgemeinen Formel (6) mit 1-Amino-3,6-disulfo-8-naphthol in saurem Medium bei einem pH-Wert zwischen 0 und 3, vorzugsweise zwischen 1 und 2, und bei einer Temperatur zwischen 5 und 30°C herstellen.

Aromatische Amine entsprechend der allgemeinem Formel (6), die als Ausgangsverbindungen zur Herstellung der erfindungsgemäßen Disazoverbindungen dienen, sind beispielsweise: 1-Aminobenzol-4-β-sulfatoethylsulfon, 1-Aminobenzol-4-vinylsulfon, 1-Aminobenzol-3-β-sulfatoethylsulfon, 1-Aminobenzol-3-vinylsulfon, 1-Aminobenzol-2-β-sulfatoethylsulfon, 1-Amino-2-methoxy-benzol-5-β-sulfatoethylsulfon, 1-Amino-2-methoxy-benzol-5-vinylsulfon, 1-Amino-4-methoxy-benzol-5-β-sulfatoethylsulfon, 1-Amino-2-methoxy-benzol-4-β-sulfatoethylsulfon, 1-Amino-2,5-dimethoxy-benzol-4-β-sulfatoethylsulfon, 1-Amino-2,5-dimethoxy-benzol-4-vinyl-sulfon, 1-Amino-2,4-dimethoxy-

benzol-5-β-sulfatoethylsulfon, 1-Amino-2-methoxy-5-methyl-benzol-4-β-sulfatoethylsulfon, 1-Amino-2-methoxy-5-methyl-benzol-4-vinylsulfon, 1-Amino-2-methoxy-5-chlor-benzol-4-β-sulfatoethylsulfon, 1-Amino-2-chlor-benzol-5-β-sulfatoethylsulfon, 1-Amino-2,6-dichlorbenzol-4-β-sulfatoethylsulfon, 1-Amino-2-brom-benzol-4-β-sulfatoethylsulfon, 1-Aminobenzol-5-β-sulfatoethylsulfonyl-2-carbonsäure, 1-Aminobenzol-4-β-sulfatoethylsulfonyl-2-sulfonsäure, 1-Aminonaphthalin-4-β-sulfatoethylsulfon, 1-Amino-naphthalin-5-β-sulfatoethylsulfon 2-Aminonaphthalin-5-β-sulfatoethylsulfon 2-Aminonaphthalin-6-β-sulfatoethylsulfon 2-Aminonaphthalin-7-β-sulfatoethylsulfon, 2-Aminonaphthalin-4,8-bis-β-sulfatoethylsulfon, 2-Aminonaphthalin-6-β-sulfatoethylsulfonyl-1-sulfonsäure und 2-Aminonaphthalin-8-β-sulfatoethylsulfonyl-6-sulfonsäure.

Die als Ausgangsverbindung dienenden aromatischen Amine der allgemeinen Formel (5) lassen sich in an und für sich üblicher und bekannter Verfahrensweise durch Umsetzung der 1,3-Diamino-benzol-4-sulfonsäure mit dem Säurechlorid der entsprechenden aromatischen Carbonsäure herstellen. Solche Verfahrensweisen sind in der Literatur zahlreich bekannt. Acylierungsmittel sind insbesondere 3-(β-Chlorethylsulfonyl)-benzoylchlorid, 4-(β-Chlorethylsulfonyl)-benzoylchlorid, 3-(β-Chlorethylsulfonyl-methyl)benzoylchlorid, 4-(β-Chlorethylsulfonylmethyl)-benzoylchlorid, 4-(β-chlorethylsulfonyl)-cinnamoyl-chlorid, 3-(N-Methyl-N-β-chlorethylsulfonyl)-amino-benzoylchlorid und 4-(N-Methyl-N-β-chlorethyl-sulfonyl)-amino-benzoylchlorid.

Die erfindungsgemäßen Verbindungen lassen sich aus ihren Hestellungsgemischen nach allgemein bekannten Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung.

Falls die letztgenannte Art der Isolierung der erfindungsgemäßen Verbindungen gewählt wird, empfiehlt es sich in Fällen, in denen die Reaktionslösung größere Sulfatmengen enthält, vor dem Eindampfen das in den Lösungen vorhandene Sulfat durch Fällung als Calciumsulfat und Abtrennung durch Filtration zu entfernen. In manchen Fällen kann es auch wünschenswert sein, die Farbstofflösung, gegebenenfalls nach Aufkonzentrieren und/oder Zusatz von Puffersubstanzen, direkt als Flüssigpräparation der färberischen Verwendung zuzuführen.

Die neuen Verbindungen der vorliegenden Erfindung eignen sich hervorragend als Farbstoffe, insbesondere als faserreaktive Farbstoffe, zum Färben oder Bedrucken von Materialien aus hydroxy- und/oder carbonamidgruppenhaltigen Fasern, wie insbesondere aus nativer oder regenerierter Cellulose oder aus natürlichen, regenerierten oder synthetischen Polyamiden oder Polyurethanen, wie beispielsweise von Baumwolle, Hanf, Leinen, Jute, Viskosekunstseide, Wolle, Seide, Polyamid-6, Polyamid-6,6, Polyamid-11 oder Polyamid-4. Besonders geeignet sind die neuen Verbindungen zum Färben und Bedrucken von Celulosefasermaterialien.

Die neuen Verbindungen werden auf die genannten Substrate analog bekannten und üblichen Färbe- und Druckverfahren für wasserlösliche, insbesondere faserreaktive, Farbstoffe appliziert und fixiert. Sie besitzen eine gute bis sehr gute Löslichkeit und Stabilität in den Druckpasten und Färbebädern, zeigen eine hohe Farbstärke und einen guten Farbaufbau und liefern mit hohen Fixiergraden marineblaue bis schwarze Färbungen und Drucke, die sich, insbesondere bei den Färbungen und Drucken auf Cellulosefasern, durch gute bis sehr gute Gebrauchs- und Fabrikationsechtheiten, wie beispielsweise Licht-, Wasch-, Wasch-, Meerwasser-, Chlorbadewasser-, Säure- und Alkaliechtheiten, Überfärbeechtheiten, alkalische und saure Schweißechtheiten, Abgasechtheiten (Stickoxidechtheit) sowie Bügel-, Plissier-, Dekatier-, Trockenreinigungs- und Reibechtheiten, Auszeichnen. Nichtfixierte Farbstoffanteile lassen sich gut auswaschen. Ebenso beistzen die Färbungen und Drucke der erfindungsgemäßen Verbindungen eine gute Beständigkeit gegenüber Kupferionen bzw. gegenüber Kupferionen abgebenden Stoffen. Bei der Anwendung der erfindungsgemäßen Verbindungen zum Bedrucken von Cellulosefasermaterialien wird darüberhinaus eine Griffverhärtung des gefärbten Materials vermieden; weiterin erhält man im Druck scharfe Konturen mit einem klaren Weißfond. Die mit den erfindungsgemäßen Verbindungen hergestellten Drucke und Färbungen flecken im nicht-fixierten Zustand beim Ablegen und Abtafeln nicht ab bzw. bluten nicht aus und zeigen eine hohe Säurelagerbeständigkeit, somit kein "acid fading".

Insbesondere sind jedoch die sehr guten Naß- und Trockenlichtechtheiten hervorzuheben. Sehr gute Naßlichtechtheiten zeigen sich bei der Belichtung von Färbungen und Drucken, die mit destilliertem Wasser, mit Trinkwasser und mit alkalischen und sauren Schweißlösungen imprägniert wurden. Diese Naßlichtechtheiten haben inzwischen einen hohen Gebrauchswert erreicht.

Die vorliegende Erfindung betrifft weiterhin die Verwendung der erfindungsgemäßen Verbindungen zum Färben oder Bedrucken der obengenannten Fasermaterialien bzw. ein Verfahren zum Färben oder Bedrucken oder obengenannten Fasermaterialien, bei welchen die erfindungsgemäßen Verbindungen analog bekannten und üblichen Verfahrensweisen der Färberei- und Druckereiindustrie Auf das Fasermaterial appliziert und anschließend fixiert werden. Beispielsweise werden diese Verfahren so ausgeführt, daß man Cellulosefasermaterialien in einem wäßrigen, gegebenenfalls übliche Färbehilfsmittel enthaltenden Färbebad nach dem Ausziehverfahren unter Verwendung von alkalisch wirkenden Mitteln behandelt, so bei einer Temperatur zwischen 15 und 102°C und vorzugsweise zwischen 40 und 80°C, wobei das Fasermaterial in sehr guten Farbausbeuten gefärbt wird. Im Temperaturbereich zwischen 40 und 80°C, insbesondere 40 und 70°C, wird der sehr hohe Fixiergrad von der Färbetemperatur nur wenig beeinflußt; dies bedingt eine Färbung mit einer gleichmäßig sehr guten Farbausbeute, die im wesentlichen von der

gewählten Färbetemperatur innerhalb diese Temperaturbereiches unabhängig ist.

Mit den Klotzverfharen, die in der Tecknik bekannt und üblich sind, werden auf Cellulosefasermaterialien ebenfalls Färbungen mit ausgezeichneten Farbausbeuten erhalten; dieses Verfahren kann ein- oder zweiphasig durchgeführt werden, so daß die Fixierung mit Hilfe des alkalisch wirkenden Mittels, das gleichzeitig oder nachträglich zur Applikation des Farbstoffes auf as Fasermaterial aufgebracht wurde, oder durch Verweilen des geklotzten Fasermaterials für 5 Minuten bis 20 Stunden bei Raumtemperatur oder Temperaturen bis zu 60°C oder durch Dämpfen oder durch Behandlung mit Trockenhitze durchgeführt werden kann. Nicht fixierte Farbstoffanteile lassen sicht leicht auswaschen.

Die Verwendung der erfindungsgemäßen Verbindungen in Druckverfahren erfolgt analog den bekannten und üblichen Druck- und Fixiermethoden zum Färben von Cellulosefasern. Man kann hierbei bevorzugt so vorgehen, daß einphasig mit einer die erfindungsgemäße Verbindung und Natriumbicarbonat oder anderes säurebindendes Mittel, wie Kalimbicarbonat, Natrium- oder Kaliumcarbonat, Natronlauge, Kalilauge oder Natriumtrichloracetat, enthaltenden Druckpaste und anschließendes Dämpfen des bedruckten Materials bei 101 bis 103°C oder zweiphasig unter Bedrucken mit einer die erfindungsgemäße Verbindung enthaltenden neutralen oder schwach sauren Druckpaste und anschließender Fixierung durch ein heißes, elektrolythaltiges, alkalisches Bad oder durch Überklotzen mit einer alkalischen, elektrolythaltigen Flotte und anschließendem Verweilen, Dämpfen oder Behandlung mit Trockenhitze des überklotzten Materials arbeitet; man erhält farbstarke Drucke mit gutem Stand der Konturen und einem klaren Weißfond. Die Drucke zeigen unabhängig von den Fixierbedingungen eine hohe Nuancenkonstanz.

Das Färben der Polyamid- oder Polyurethanfasern wird üblicherweise aus sauerem Milieu ausgeführt. So kann man beispielsweise dem Färbebad Essigsäure oder einem Puffer aus Essigsäure und Ammoniumacetate zufügen, um den gewünschten pH-Wert zu erhalten. Zwecks Erreichung einer brauchbaren Egalität der Färbungen empfiehlt sich ein Zusatz an übliche Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von Stearylamin mit Ethylenoxid. Die Färbungen können zowohl bei Siedetemperatur als auch bei 110 bis 120°C ausgeführt werden.

Die nachstehenden Beispiele dienen zur Erläuterung der Erfindung. Die formelmäßig geschriebenen erfindungsgemäßen Disazoverbindungen sind in Form der freien Säuren angegeben; im allgemeinen werden sie in Form ihrer Natrium- oder Kaliumalze hergestellt und isoliert und in Form ihrer Salze zum Färben verwendet. Ebenso können die in den nachfolgenden Beispielen, insbesondere Tabellenbeispielen, in form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu volumenteilen im Verhältnis von Kilogramm zu Liter.

Die in den Beispielen für die erfindungsgemäßen Verbindungen angegebenen Maxima($\lambda_{max}$) im sichtbaren Absorptionsbereich wurden in wäßriger Lösung ermittelt.

## Beispiel 1

28,1 Teile Aminobenzol-4-β-sulfatoethylsulfon werden in üblicher Weise in einer Mischung aus 100 Teilen Eiswasser und 35 Teilen 31%iger wäßriger Salzsäure mit 13,1 Volumenteilen einer wäßrigen 40%igen Natriumnitritlösung diazotiert. Bach Beendigung der Diazotierungsreaktion setzt man 31,9 Teile 1-Amino-8-naphthaol-3,6-disulfonsäure hinzu, stellt den pH-Wert auf 1 bis 2 ein und vervollständigt die Kupplungsreaktion innerhalb dieses pH-Bereiches bei einer Temperatur unterhalb von 10°C unter etwa 4-stündigem Rühren.

Nach Beendigung der Kupplungreaktion gibt man eine Diazoniumsalzsuspension hinzu, die wie folgt hergestellt wurde: Eine nautrale Lösung von 28,2 Teilen 1,3-Diaminobenzol-4-sulfonsäure in 300 Teilen Wasser versetzt man mit 15 Teilen Natriumbicarbonat und aschließend innerhalb einer Stunde unter gutem Rühren mit einer Lösung von 48,2 Teilen 3-β-Chlkorethylsulfonyl-benzoylchlorid in 150 Teilen Aceton. Das Reaktionsgemisch wird sodann auf 10°C abgekühlt und mit einem Gemisch aus 100 Teilen Eis und 16 Teilen konzentrierter Schwefelsäure versetzt; danach werden 13,5 Volumenteile einer 40%igen wäßrigen Natriumnitritlösung hinzugegeben und der Ansatz noch zwei Stunden lang gerührt.

Nach Zugabe dieser Diazoniumsalzsuspension in die saure Lösung der Kupplungskomponente wird dieser Kupplungsansatz mittels etwa 28 Teilen Natriumcarbonat neutralisiert; man isoliert die erfindungsgemäße Verbindung als elektrolythaltiges (wie Natriumchlorid und Natriumsulfat enthaltendes) Produkt durch Eindampfen zur Trockne oder durch Sprühtrocknung. Die erfindungsgemäße Disazoverbindung besitzt, in Form der freien Säure geschrieben, die folgende Formel:

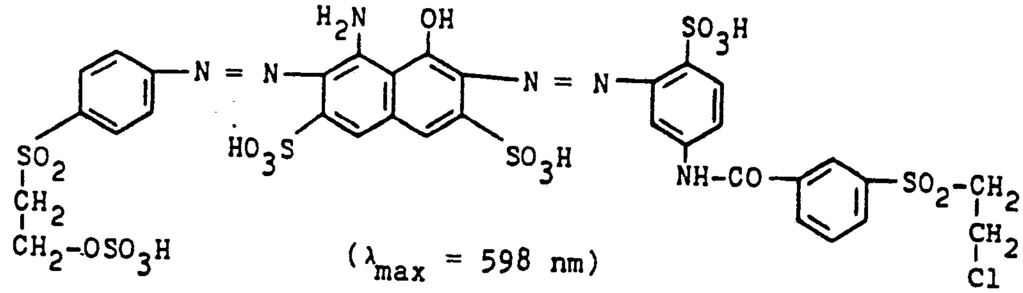

($\lambda_{max}$ = 598 nm)

Die erfindungsgemäße Verbindung hat gute faserreaktive Farbstoffeigenschaften und liefert auf den in der Beschreibung genannten Fasermaterialien, wie insbesondere auf Cellulosefasermaterialien, beispielsweise auf Baumwolle, nach den für faserreaktive Farbstoffe gebräuchlichen Färbe- und Druckverfahren mit hohem Fixiergrad farbstarke Marineblaue Färbungen und Drucke mit guten bis sehr guten Gebrauchsechtheiten, von denen vor allen die ausgezeichneten Lichtechtheiten auf trockenem und mit Trinkwasser oder wäßrigen Schweißlösungen imprägniertem Gewebe und die vorzüglichen Chlor-, Wasch- und Schweißechtheiten hervorzuheben sind.

Beispiel 2

Zu einer neutralen Lösung des natriumsalzes von 68 Teilen 1,3-Diamonobenzol-4-sulfonsäure und 40 Teilen Natriumbicarbonat in 360 Teilen Wasser läßt man im Verlaufe von einer Stunde unter gutem Rühren eine 60°C warme Lösung von 113 Teilen 4-(β-Chlorethylsulfonyl-methyl)-benzoylchlorid in 160 Teilen Toluol hinzulaufen; hierbei fällt der pH-Wert von 7,5 aus 5,5 ab. Nach Beendigung dieser Kondensations reaktion wird das Reaktionsgemisch mit 600 Teilen Eis und 110 Teilen konzentrierter Schwefelsäure versetzt und sodann mit 72 Volumenteilen einer wäßrigen 5n-Natriumnitritlösung in üblicher Weise diazotiert.

Zu dieser Diazoniumsalzsuspension gibt man als zweite Diazokomponente 101 Teile 4-(β-Sulfatoethylsulfonyl)-anilin und diazotiert es durch weitere Zugabe von etwa 75 Volumenteilen einer 5n-Natriumnitritlösung. Man rührt zwei Stunden nach und entfernt überschüssiges Nitrit mit Amidosulfonsäure.

In diesen Reaktionsanzatz mit dem Gemisch der Diazoniumsalze gibt man langsam 110 Teile 1-Amino-8-naphthol-3,6-disulfonsäure hinzu und rührt zunächst bei einem pH-Wert von 2 bis unterhalb 1 und einer Temperatur von 0 bis 5°C weiter. Nach etwa 4 Stunden stellt man den pH-Wert mittels etwa 110 Teilen wasserfreiem Natriumcarbonat auf einen pH-Wert von 5 bis 6 und rührt noch einige Zeit bis zur Beendigung der kupplungsreaktion nach.

Die erfindungsgemäße Verbindung wird durch Eindampfen oder Sprühtrocknung der Syntheselösung erhalten. Es ist jedoch vorteilhaft, den erfindungsgemäßen Disazofarbstoff zur Entfernung von geringen Anteilen anderer als Nebenprodukte gebildeter Azoverbindungen, die eine rote oder violette Farbe besitzen, mit 500 Teilen Natriumchlorid oder Kaliumchlorid auszusalzen.

Das erhaltene baluschwarze Pulver enthälte neben den Elektrolytsalzen das erfindungsgemäße Alkalimetallsalz der Verbindung der Formel

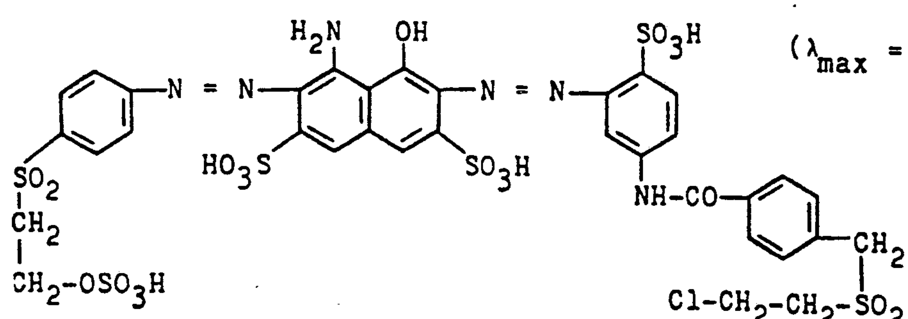

($\lambda_{max}$ = 599 nm)

die wie die erfindungsgemaße Verbindung des Beispieles 1 sehr gute faserreaktive Farbstoffeigenschaften besitzt und nach den in der Technik für faserreaktive Farbstoffe üblichen Applikations- und Fixiermethoden insbesondere Cellulosefasermaterialien in farbtiefen marineblauen Tönen färbt. Die Echtheiten der erhältlichen Färbungen und Drucke entsprechen in der Qualität denen, die mit der erfindungsgemäßen Verbindung des Beispieles 1 erhältlich sind.

Beispiel 3

18,8 Teile 1,3-Diaminobenzol-4-sulfonsäure werden in wäßriger Lösung bei einem pH-Wert zwischen 3 und 6 langsam mit 34 Teilen 3-β-Chlorethylsulfonyl-benzoylchlorid in geschmolzenem zustand (von 60°C) versetzt. Nach Beendigung der Acylierungsreaktion gibt man zu dem Ansatz 180 Volumenteile einer

31%igen wäßrigen Salzsäure hinzu, kühlt auf 0 bis 5°C, gegebenenfalls durch Zugabe von Eis, ab und diazotiert in üblicher Weise mittels 14 Volumeteilen einer 40%igen wäßrigen Natriumnitritlösung; der Diazotierungsansatz wird sodann noch etwa 30 Minuten bei 0 bis 10°C weiter-gerührt.

Sodann gibt man eine Suspension von 28,1 Teilen 4-(β-Sulfatoethylsulfonyl)-anilin in 100 Teilen Wasser hinzu und diazotiert die Anilinverbindung mittels weiterer 14 Volumenteile einer 40%igen wäßrigen Natriumnitritlösung. Der Diazotierungsansatz wird bei deutlichem Nitritüberschuß noch 2 Stunden nachgerührt, danach überschüssiges Nitrit in üblicher Weise entfernt.

Zu diesem Ansatz mit den beiden Diazoniumsaltzen gibt man 30,3 Teile 1-Amino-8-naphthol-3,6-disulfonsäure, rührt bei einem pH-Wert zwischen 1 und 2 und einer Temperatur zwischen 0 und 10°C noch 3 Stunden nach, stellt den pH-Wert sodann auf 6 bis 6,5 (mittels etwa 50 Teilen Natriumbicarbonat) und isoliert die erfindungsgemäße Verbindung durch Aussalzen mit Natriumchlorid oder Kaliumchlorid oder durch Eindampfen oder Sprühtrocknen der wäßrigen Syntheselösung.

Man erhält ein schwarzes elektrolytsalzhaltiges Pulver mit dem in Beispiel 1 angegebenen erfindungsgemäßen Alkalimetallsalz, das dieselben guten Farbstoffeigenschaften aufweist.

## Beispiel 4

Eine Suspension von 45 Teilen 1-Amino-3-[(4'-β-chlorethylsulfonyl-methyl)benzoylamino]-benzol-6-sulfonsäure und 28,1 Teilen 4-β-Sulfatoethylsulfonyl-anilin in 400 Teilen Wasser wird mit Natriumcarbonat auf einen pH-Wert von 7 eingestellt und noch eine Stunde gerührt. Sodann gibt man 60 Volumenteile einer wäßrigen 31%igen Salzsäure und 200 Teile Eis hinzu und diazotiert in üblicher Weise mit 27 Volumenteilen einer 40%igen wäßrigen Nariumnitritlösung. Nach Zugabe des Nitrits rührt man noch 2 Stunden bei 0 bis 10°C weiter, zerstört sodann überschüssiges Nitrit, stellt den pH-Wert der Suspension auf 2, gibt 28,7 Teile 1-Amino-8-naphthol-3,5-disulfonsäure hinzu, rührt zunächst weiter 4 Stunden weiter und stellt anschließend den pH-Wert auf 6 bis 7 und rührt noch einige Stunden bis zur Beendigung der Kupplungsreaktion nach.

Die erfindungsgemäße Verbindung wird durch Aussalzen mit Natriumchlorid oder Kaliumchlorid oder durch Eindampfen oder Sprühtrocknung isoliert. Es ist mit dem erfindungsgemäßen Alkalimetallsalz des Beispieles 2 identisch und zeigt dieselben guten faserreaktiven Farbstoffeigenschaften.

## Beispiel 5

Ein neutrale wäßrige Lösung von 18,8 Teilen 1,3-Diaminobenzol-4-sulfonsäure in 200 Teilen Wasser wird mit 20 Teilen Natriumbicarbonat versetzt und auf 10°C abgekühlt. Unter gutem Rühren gibt man innerhalb von einer Stude stetig eine 60°C warme Lösung von 36 Teilen 4-(β-Chloroethylsulfonyl-methyl)-benzoylchlorid in 80 Teilen Chlorbenzol hinzu, rührt den Ansatz anschließend noch 2 Stunden bei einem pH-Wert von 5 bis 6 nach, versetzt danach mit 18 Teilen konzentrierter Schwefelsäure und 100 Teilen Eis und diazotiert in üblicher Weise.

Zur Diazoniumsalzsuspension wird sodann eine wäßrige Lösung von 61,1 Teilen einer Monazoverbindung, die man durch sauer Kupplung von diazotiertem 4-β-Sulfatoethylsulfonylanilin auf 1-Amino-8-naphthol-3,6-disulfonsäure erhalten hat, hinzugegeben. Die Kupplungsreaktion erfolgt in einem pH-Bereich zwischen 5 und 6.

Die erhaltene erfindungsgemäße Verbindung wird in üblicher Weise aus dem Syntheseansatz isoliert. Sie entspricht der im Beispiel 2 beschriebenen erfindungsgemäßen Verbindung und zeigt die gleichen guten faserreaktiven Farbstoffeigenschaften.

## Beispiel 6

Eine neutrale wäßrige Lösung von 18,8 Teilen 1,3-Diaminobenzol-4-sulfonsäure in 200 Teilen Wasser wird unter Einhaltung einer Temperatur von 5 bis 10°C und einem pH-Wert von 5 bis 7 mit einer Lösung von 4-(N-Methyl-N-β-chlorethylsulfonyl)-amino-nbenzoylchlorid in 100 Teilen Ethylenchlorid versetzt. Nach Beendigung der Kondensationsreaktion gibt man 14 volumenteile einer wäßrigen 40%igen Natriumnitritlösung hinzu und rührt den gesamten Ansatz auf ein Gemisch aus 60 Volumenteilen einer wäßrigen 31%igen Salzsäure und 100 Teilen Eis. Man rührt noch eine Stunde nach, gibt sodann eine neutrale wäßrige Lösung von 4-β-Sulfatoethylsulfonyl-anilin und weitere 14 Volumenteile einer wäßrigen 40igen Natriumnitritlösung hinzu und rührt das Diazoniumsalzgemisch noch zwei Stunden bei einem pH-Wert zwischen 1 und 2 und einer Temperatur zwischen 0 und 10°C nach. Überschüssiges Nitrit wird sodann zwerstört, und 30 Teile 1-Amino-8-naphthol-3,6-disulfonsäure werden in die Suspension der Diazoniumsalz gegeben. Der Kupplungsansatz wird 3 bis 5 Stunden bei Einhaltung eines pH-Wertes von kleiner als 2 gerührt und anschließend mit Natriumcarbonat auf einen pH-Wert von 5 bis 6 eingestellt; er wird noch einige Zeit nachgerührt und sodann mit 10 Teilen Aktivkohle oder Kieselgur geklärt. Die erfindungsgemäße Disazoverbindung wird in üblicher Weise durch Aussalzen oder Sprühtrocknung isoliert.

Man erhält ein blauschwarzes, elektrolytsalzhaltiges Pulver des erfindungsgemäßen Alkalimetallsalzes der Verbindung der Formel

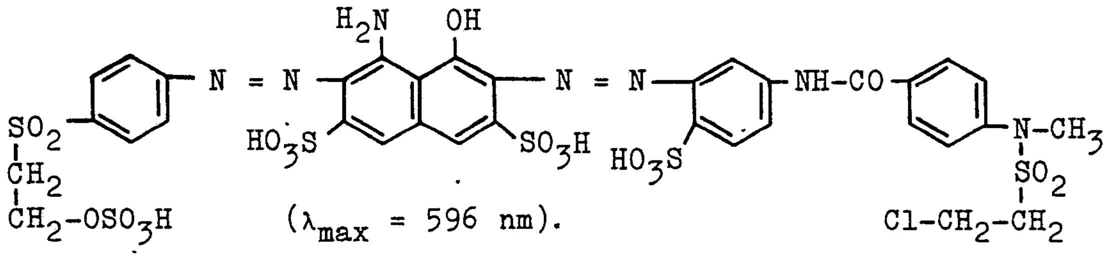

($\lambda_{max}$ = 596 nm).

Diese erfindungsgemäße Verbindung zeigt sehr gute faserreaktive Farbstoffeigenschaften und liefert auf den in der Beschreibung genannten Fasermaterialien, insbesondere auf Cellulosefasermaterialien nach den für faserreaktive Farbstoffe üblichen Applikations- und Fixiermethoden, farbstarke marineblaue Färbungen mit guten Echtheiten, von denen insbesondere die Naßlichtechtheiten hervorgehoben werden können.

Beispiele 7 bis 39

In den nachfolgenden Tabellenbeispielen sind weitere erfindungsgemäße Verbindungen entsprechend der allgemeinen formel (1) mit Hilfe deren Formelreste beschrieben. Sie lassen sich in erfindungsgemäßer Weise, beispielsweise analog einem der obigen Ausführungsbeispiele, mit den entsprechenden Ausgangsverbindungen herstellen und besitzen sehr gute faserreaktive Farbstoffeigenschaften. Insbesondere auf Cellulosefasermaterialien liefern sie nach den für faserreaktive Farbstoffe üblichen Applikations- und Fixiermethoden farbstarke Färbungen und Drucke mit der jeweils angegebenen Nuance und guten Echtheiten, von denen insbesondere die Naßlichtechtheiten hervorgehoben werden können.

| Bsp. | Verbindung der Formel (1) mit X-$SO_2$-D- gleich ... | R gleich .... | Farbton ($\lambda_{max}$ = ... nm) |
|---|---|---|---|
| 7 | 4-(ß-Sulfatoethyl-sulfonyl)-phenyl | 4-(ß-Chlorethylsulfonyl)-benzoyl) | marine-blau (596) |
| 8 | dito | 3-(ß-Chlorethylsulfonyl-methyl)-benzoyl | marine-blau (598) |
| 9 | dito | 4-(ß-Chlorethylsulfonyl)-cinnamoyl | marine-blau (599) |
| 10 | dito | 3-(N-Methyl-N-ß-chlor-ethylsulfonyl)-amino-benzoyl | marine-blau (598) |
| 11 | 3-(ß-Sulfatoethyl-.sulfonyl)-phenyl | 3-(ß-Chlorethylsulfonyl)-benzoyl | marine-blau |
| 12 | dito | 4-(ß-Chlorethylsulfonyl-methyl)-benzoyl | marine-blau |
| 13 | dito | 4-N-ß-Methyl-N-ß-chlor-ethylsulfonyl-amino-benzoyl | marine-blau |
| 14 | 3-(ß-Sulfatoethyl-sulfonyl)-phenyl | 3-(ß-Chlorethylsulfonyl)-benzoyl | marine-blau |
| 15 | dito | 4-(ß-Chlorethylsulfonyl-methyl)-benzoyl | marine-blau |
| 16 | dito | 4-N-ß-Methyl-N-ß-chlor-ethylsulfonyl-amino-benzoyl | marine-blau |
| 17 | dito | 4-(ß-Chlorethylsulfonyl)-cinnamoyl | marine-blau |
| 18 | 3-(ß-Sulfatoethyl-sulfonyl)-phenyl | 3-(ß-Chlorethylsulfonyl)-benzoyl | marine-blau |
| 19 | dito | 4-(ß-Chlorethylsulfonyl-methyl)-benzoyl | marine-blau |
| 20 | dito | 4-[N-ß-Methyl-N-ß-chlor-ethylsulfonyl]-amino-benzoyl | marine-blau |
| 21 | dito | 3-(ß-Chlorethylsulfonyl-methyl)-benzoyl | marine-blau |
| 22 | 6-(ß-Sulfatoethyl-sulfonyl)-1-sulfo-2-naphthyl | 3-(ß-Chlorethylsulfonyl)-benzoyl | marine-blau |
| 23 | dito | 4-(ß-Chlorethylsulfonyl-methyl)-benzoyl | marine-blau |

| Bsp. | Verbindung der Formel (1) mit X-SO$_2$-D- gleich ... | R gleich .... | Farbton ($\lambda_{max}$ = ... nm) |
|---|---|---|---|
| 24 | 6-(ß-Sulfatoethyl-sulfonyl)-1-sulfo-2-naphthyl | 3-(ß-Chlorethylsulfonyl)-benzoyl | marine-blau |
| 25 | dito | 4-(ß-Chlorethylsulfonyl-methyl)-benzoyl | marine-blau |
| 26 | 6-(ß-Sulfatoethyl-sulfonyl)-1-sulfo-2-naphthyl | 3-(ß-Chlorethylsulfonyl)-benzoyl | marine-blau |
| 27 | dito | 4-(ß-Chlorethylsulfonyl-methyl)-benzoyl | marine-blau |
| 28 | 6-(ß-Sulfatoethyl-sulfonyl)-1-sulfo-2-naphthyl | 3-(ß-Chlorethylsulfonyl)-benzoyl | marine-blau |
| 29 | dito | 4-(ß-Chlorethylsulfonyl-methyl)-benzoyl | marine-blau |
| 30 | 4-Vinylsulfonyl-phenyl | 4-(ß-Chlorethylsulfonyl-methyl)-benzoyl | marine-blau |
| 31 | 3-Vinylsulfonyl-phenyl | dito | marine-blau |
| 32 | 4-(ß-Sulfatoethyl-sulfonyl)-2-methoxy-phenyl | dito | marine-blau |
| 33 | 3-Vinylsulfonyl-6-methoxy-phenyl | dito | marine-blau |
| 34 | 3-Vinylsulfonyl-4-methoxy-phenyl | dito | marine-blau |
| 35 | 4-Vinylsulfonyl-2-brom-phenyl | dito | marine-blau |
| 36 | 4-Vinylsulfonyl-2-sulfo-phenyl | dito | marine-blau |
| 37 | 4-Vinylsulfonyl-2,6-dichlor-phenyl | dito | marine-blau |
| 38 | 3-Vinylsulfonyl-6-chlor-phenyl | dito | marine-blau |
| 39 | 3-Vinylsulfonyl-6-carboxy-phenyl | dito | marine-blau |

**Patentansprüche**

1. Wasserlösliche Disazoverbindung entsprechend der allgemeinen Formel (1)

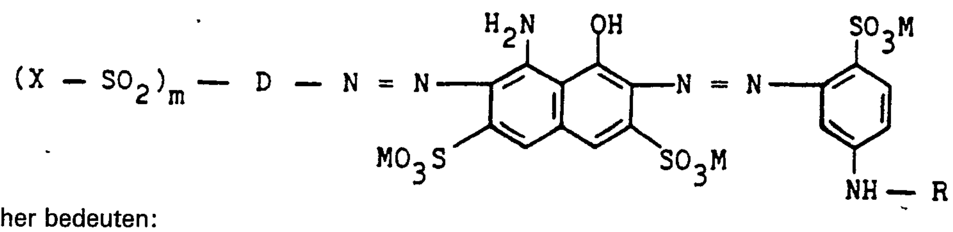

(1)

in welcher bedeuten:

D ist ein Benzolring oder ein Naphthalinring, die beide durch Substituenten aus der Gruppe Chlor, Brom, Alkyl von 1 bis 4 C-Atomen, Alkoxy von 1 bis 4 C-Atomen, Carboxy und Sulfo substituiert sein können;

X ist die Vinylgruppe oder eine β-Sulfatoethyl-Gruppe;

R ist eine 3-(β-Chlorethylsulfonyl)-benzoyl-, 4-(β-Chloroethylsulfonyl)-benzoyl-, 3-(β-Chlorethylsulfonyl-methyl)-benzoyl-, 4-(β-Chlorethylsulfonyl-methyl)-benzoyl-, 4-(β-Chlorethylsulfonyl)-cinnamoyl-, 3-(N-Methyl-N-β-chloroethylsulfonyl)-aminobenzoyl- oder 4-(N-Methyl-N-β-chloroethylsulfonyl)-aminobenzoyl-Gruppe;

m ist die Zahl 1 oder 2,

M ist ein Wasserstoffatom oder ein Alkalimetall.

2. Disazoverbindung nach Anspruch 1, dadurch gekennzeichnet, daß der Formelrest X—$SO_2$—S— eine Gruppe der allgemeinen Formel (2)

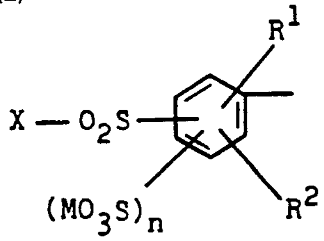

(2)

bedeutet, in welcher M und X die in Anspruch 1 genannten Bedeutungen haben, $R^1$ und $R^2$ zueinander gleich oder voneinander verschieden sind und $R^1$ ein Wasserstoffatom oder eine Methyl-, Methoxy-, Ethoxy- oder Carboxygruppe oder ein Chlor oder Bromatom bedeutet, $R^1$ für ein Wasserstoffatom oder eine Methyl-, Methoxy, oder Ethoxygruppe oder ein Chloratom steht und n die Zahl Null oder 1 bedeutet.

3. Disazoverbindung nach Anspruch 1, dadurch gekennzeichnet, daß der Formelrest X—$SO_2$—D— eine Gruppe der allgemeinen Formel (3)

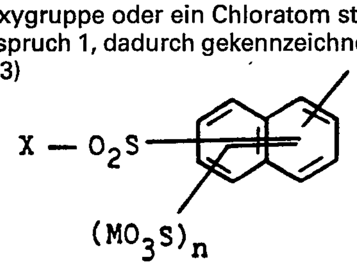

(3)

bedeutet, in welcher M und X die in Anspruch 1 genannten Bedeutungen haben und n für die Zahl Null oder 1 steht.

4. Disazoverbindung nach einem der Ansprüche 1 bis 3, dadurch gekennzeichnet, daß X die β-Sulfatoethyl-Gruppe ist.

5. Disazoverbindung nach einem der Ansprüche 1 bis 4, dadurch gekennzeichnet, daß R eine 3-(β-Chlorethylsulfonyl)-benzoyl-, 4-(β-Chlorethylsulfonyl-methyl)-benzoyl- oder 4-(N-Methyl-N-β-chlorethylsulfonyl)-amino-benzoyl-Gruppe ist.

6. Verbindung nach Anspruch 1 der Formel

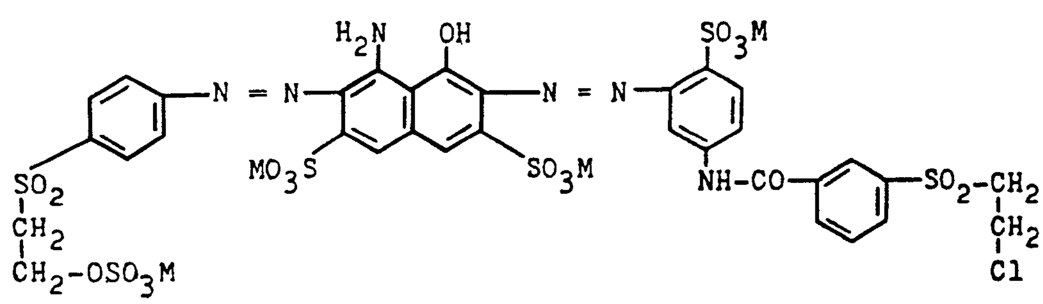

in welcher M die in Anspruch 1 genannte Bedeutung besitzt.

7. Verbindung nach Anspruch 1 der Formel

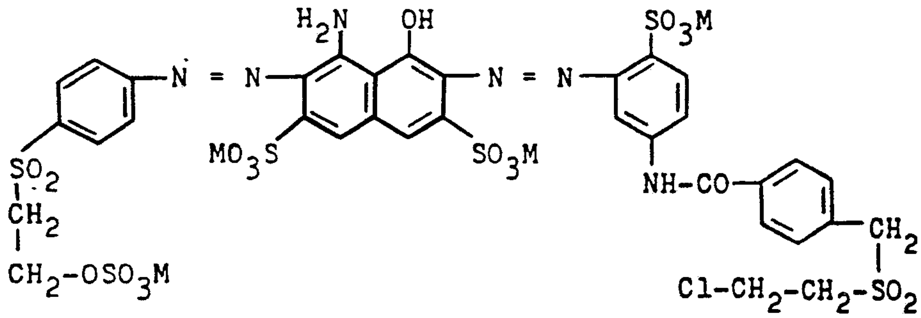

in welcher M die in Anspruch 1 genannte Bedeutung besitzt.

8. Verfahren zur Herstellung der in Anspruch 1, genannten und definierten Disazoverbindungen der Allgemeinen Formel (1), dadurch gekennzeichnet, daß man eine Monoazoverbindung der allgemeinen Formel (4)

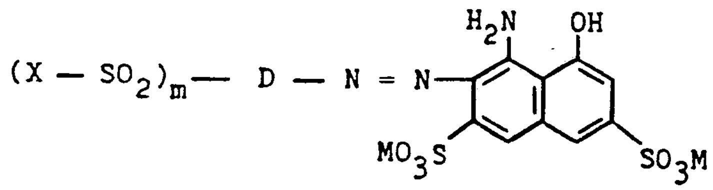

(4)

in welcher D, M, X und m die in Anspruch 1 genannten Bedeutungen haben, mit der Diazoniumverbindung eines aromatischen Amins der allgemeinen Formel (5)

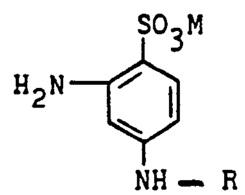

(5)

in welcher M und R die in Anspruch 1 genannten Bedeutungen haben, kuppelt, oder daß man in einer Eintopfreaktion eine diazotiertes aromatisches Amin der obengenannten und definierten allgemeinen Formel (5) und ein diazotiertes aromatisches Amin der allgemeinen Formel (6)

$$(X—SO_2)_m—D—NH_2 \qquad (6)$$

in welcher m, D und X die im Anspruch 1 genannten Bedeutungen haben, in äquivalenter menge Mit 1-Amino-8-naphthol-3,6-disulfonsäure im Gemisch zunächst bei einem pH-Wert zwischen 0 und 3 und sodann bei einem pH-Wert zwischen 3,5 und 8 umsetzt.

9. Verwendung einer Disazoverbindung nach Anspruch 1 oder einer nach Anspruch 8 hergestellten Disazoverbindung als Farbstoff.

10. Verwendung nach Anspruch 9 zum Färben oder Bedrucken von hydroxy- und/oder carbonamidgruppenhaltigem Fasermaterial.

11. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, daß man als Farbstoff eine Verbindung der in Anspruch 1 genannten und definierten allgemeinen Formel (1) einsetzt.

**Revendications**

1. Composé disazoïque hydrosoluble répondant à la formule générale (1):

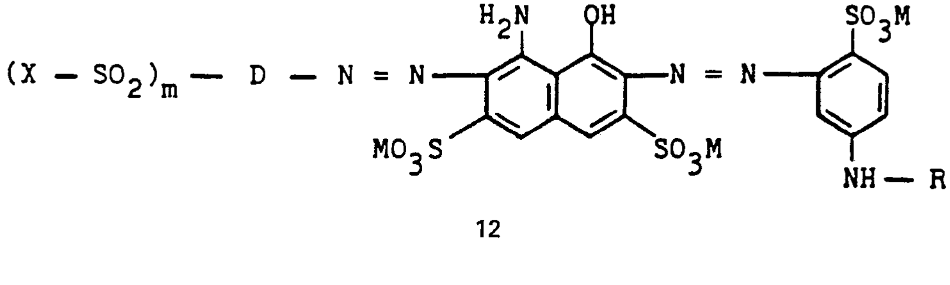

(1)

dans laquelle:

D représente un noyau benzénique ou un noyau naphtalénique, pouvant porter tous dexu des substituants choisis parmi un atome de chlore, un atome de brome, un groupe alkyle ayant 1 à 4 atomes de carbone, alcoxy ayant 1 à 4 atomes de carbone, carboxy et sulfo;

X représente le groupe vinyle ou un groupe sulfato-2′ éthyle;

R représente un groupe (chlor-2′ éthylsulfonyl)-3 benzoyle, (chlor-2′ éthylsulfonyl)-4 benzoyle, (chloro-2′ éthylsulfonyl-méthyl)-3 benzoyle, (chloro-2′ éthylsulfonyl-méthyl)-4 benzoyle, (chloro-2′ éthylsulfonyl)-4 cinnamoyle, (N-méthyl-N-chloro-2′ éthylsulfonyl)-amino-3 benzoyle ou (N-méthyl-N-chloro-2′ éthylsulfonyl)-amino-4 benzoyle;

m est un nombre valant 1 ou 2;

M représente un atome d'hydrogène ou un métal alcalin.

2. Composé disazoïque selon la revendication 1, caractérisé en ce que le reste X—$SO_2$—D— de la formule (1) représente un groupe de formule générale (2)

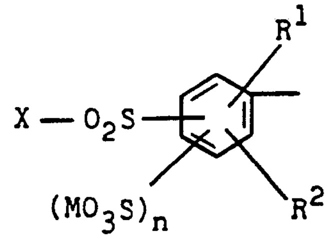

(2)

dans laquelle M et X ont les sens indiqués à la revendication 1; $R^1$ et $R^2$ sont identiques ou différents et $R^1$ représente un atome d'hydrogène ou un groupe méthyle, méthoxy, éthoxy ou carboxyle ou un atome de chlore ou de brome et $R^2$ représente un atome d'hydrogène ou un groupe méthyle, méthoxy ou éthoxy ou un atome de chlore, et n est un nombre nul ou valant 1.

3. Composé disazoïque selon la revendication 1, caractérisé en ce que le reste X—$SO_2$—D— de la formule (1) est un groupe de formule générale (3):

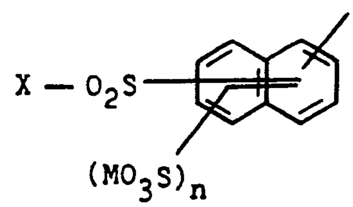

(3)

dans laquelle M et X ont les sens indiqués à la revendication 1, et n est un nombre nul ou valant 1.

4. Composé disazoïque selon l'une des revendications 1 à 3, caractérisé en ce que X représente le groupe sulfato-2′ éthyle.

5. Composé disazoïque selon l'une des revendications 1 à 4, caractérisé en ce que R représente un groupe (chloro-2′ éthylsulfonyl)-3 benzoyle, (chlor-2′ éthylsulfonyl-méthyl)-4 benzoyle ou (N-méthyl N-chloro-2′ éthylsulfonyl)-amino-4 benzoyle.

6. Composé selon la revendication 1, de formule:

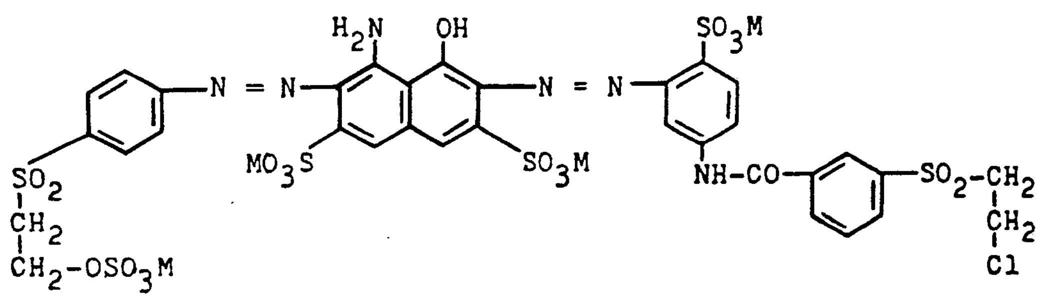

dans laquelle M a le sens indiqué à la revendication 1.

7. Composé selon la revendication 1, de formule:

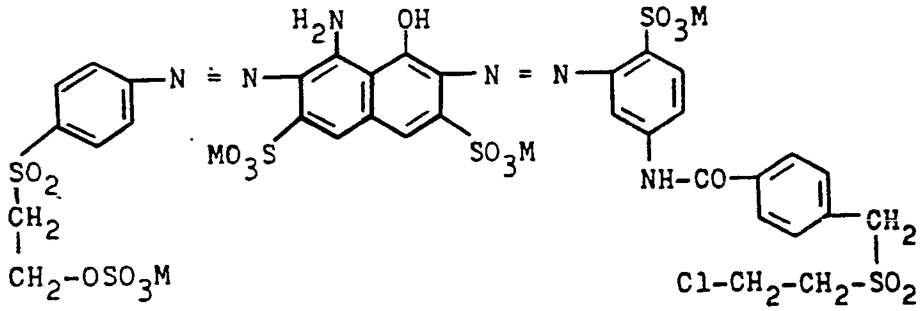

dans laquelle M a le sens indiqué à la revendication 1.

8. Procédé pour préparer les composés disazoïques de formule générale (1), cités et définis à la revendication 1, procédé caractérisé en ce qu'on soumet un composé monoazoïque de formule générale (4):

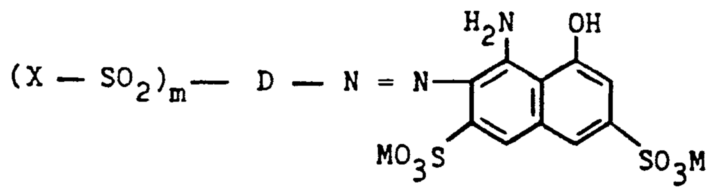

(4)

(dans laquelle D, M, X et m ont les sens indiqués à la revendication 1) à copulation avec le composé de diazonium dérivant d'une amine aromatique de formule générale (5):

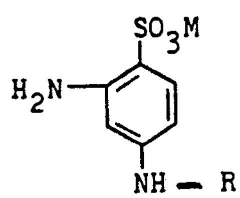

(5)

(dans laquelle M et R ont les sens indiqués à la revendication 1), ou bien en ce que, dans une réaction dans un seul et même récipient, on fait réagir une amine aromatique, diazotée, répondant à la formule générale (5) précitée et définie ci-dessus, et une amine aromatique, diazotée, de formule générale (6):

$$(X—SO_2)_m—D—NH_2 \qquad (6)$$

dans laquelle m, D, X ont les sens indiqués à la revendication 1, en une quantité équivalente avec l'acide amino-1 naphtol-8 disulfonique-3,6 en mélange, tout d'abord à un pH compris entre 0 et 3 puis à un pH compris entre 3,5 et 8.

9. Utilisation d'un composé disazoïque selon la revendication 1, ou d'un composé disazoïque préparé selon la revendication 8, à titre de colorant.

10. Utilisation selon la revendication 9, pour teindre ou imprimer une matière fibreuse contenant des groupes hydroxyles et/ou carboxyamides.

11. Procédé pour teindre (ce qui comprend l'impression) une matière contenant des groupes hydroxyles et/ou carboxamides, en particulier une matière fibreuse, dans lequel on applique sur la matière un colorant où l'on fait pénétrer un colorant dans la matière et on le fixe à l'aide de la chaleur et/ou à l'aide d'un agent de fixation des acides, procédé caractérisé en ce qu'on utilise comme colorant un composé répondant à la formule générale (1), cité et défini à la revendication 1.

**Claims**

1. A water-soluble disazo compound conforming to the formula (1)

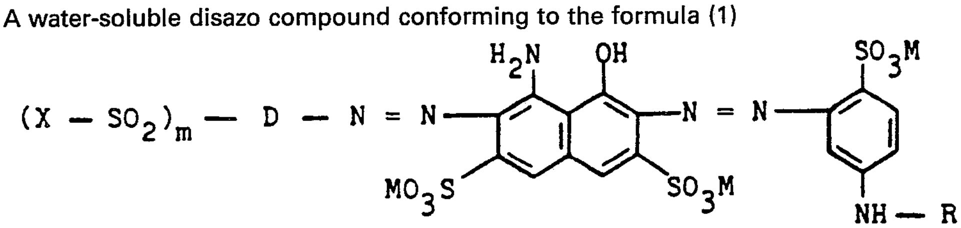

(1)

in which the meanings are:

D is a benzene ring or a naphthalene ring which can both be substituted by substituents from the group consisting of chlorine, bromine, alkyl of 1 to 4 carbon atoms, alkoxy of 1 to 4 carbon atoms, carboxyl and sulfo;

X is the vinyl group or a β-sulfatoethyl group;

R is a 3-(β-chloroethylsulfonyl)-benzoyl, 4-(β-chloroethylsulfonyl)-benzoyl, 3-(β-chlorethylsulfonylmethyl)benzoyl, 4-(β-chloroethylsulfonylmethyl)-benzoyl, 4-(β-chloroethylsulfonyl)-cinnamoyl, 2-(N-methyl-N-β-chloroethylsulfonyl)-aminobenzoyl or 4-(N-methyl-N-β-chloroethylsulfonyl)-aminobenzoyl group;

m is thė number 1 or 2;

M is a hydrogen atom or an alkali metal.

2. A disazo compound as claimed in claim 1, wherein the formula radical X—$SO_2$—D— denotes a group of the formula (2)

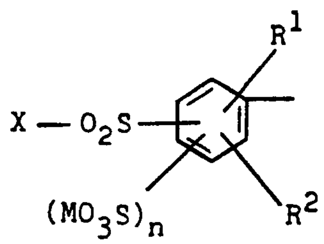

(2)

in which M and X have the meanings mentioned in claim 1, $R^1$ and $R^2$ are identical to or different from each other and $R^1$ denotes a hydrogen atom or a methyl, methoxy, ethoxy or carboxyl group or a chlorine or bromine atom, $R^2$ stands for a hydrogen atom or a methyl, methoxy or ethoxy group or a chlorine atom, and n denotes the number zero or 1.

3. A disazo compound as claimed in claim 1, wherein the formula radical X—$SO_2$—D— denotes a group of the formula (3)

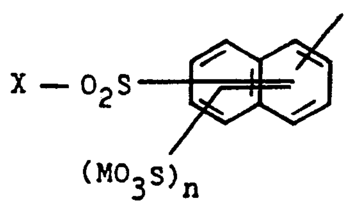

(3)

in which M and X have the meanings mentioned in claim 1 and n stands for the number zero or 1.

4. A disazo compound as claimed in any one of claims 1 to 3, wherein X is the β-sulfatoethyl group.

5. A disazo compound as claimed in any one of claims 1 to 4, wherein R is a 3-(β-chloroethylsulfonyl)-benzoyl, 4-(β-chloroethylsulfonylmethyl)-benzoyl or 4-(N-methyl-N-β-chloroethylsulfonyl)-aminobenzoyl group.

6. The compound as claimed in claim 1, of the formula

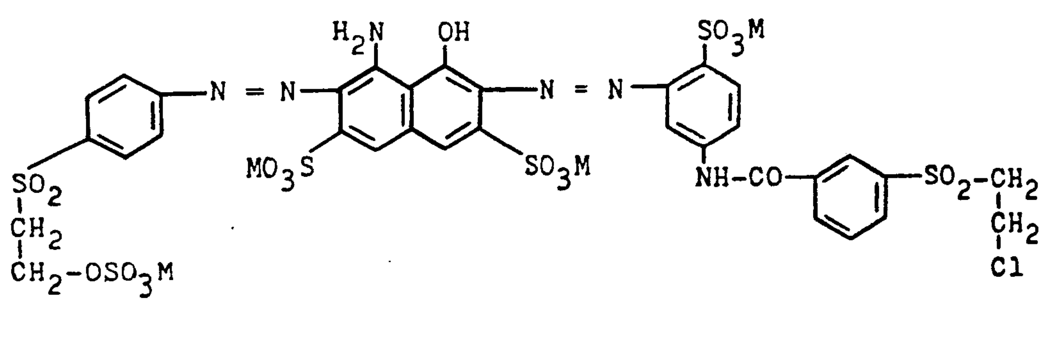

in which M has the meaning mentioned in claim 1.

7. The compound as claimed in claim 1, of the formula

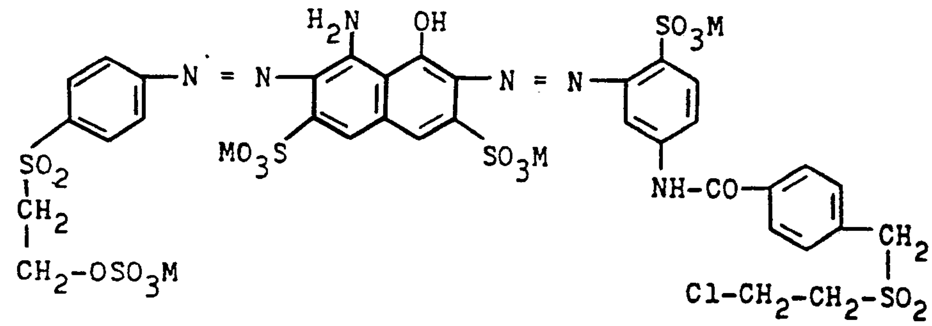

in which M has the meaning mentioned in claim 1.

8. A process for preparing a disazo compound of the formula (1) mentioned and defined in claim 1, which comprises coupling a monoazo compound of the formula (4)

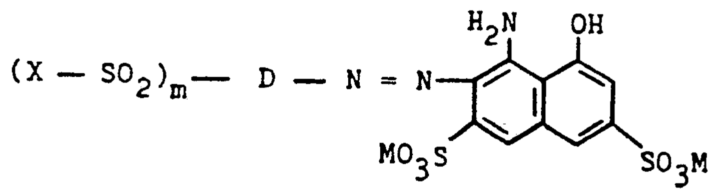

(4)

in which D, M, X and m have the meanings mentioned in claim 1, with the diazonium compound of an aromatic amine of the formula (5)

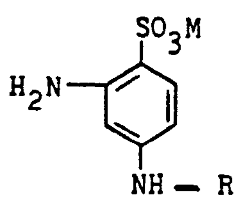

(5)

in which M and R have the meanings mentioned in claim 1, or reacting, in a single vessel reaction, a diazotized aromatic amine of the abovementioned and defined formula (5) and a diazotized aromatic amine of the formula (6)

$$(X{-}SO_2)_m{-}D{-}NH_2 \qquad (6)$$

in which m, D and X have the meanings mentioned in claim 1, in an equivalent amount with 1-amino-8-naphthol-3,6-disulfonic acid in a mixture, first at a pH value between 0 and 3 and then at a pH value between 3.5 and 8.

9. Use of a disazo compound as claimed in claim 1 or of a diazo compound prepared as claimed in claim 8, as a dye.

10. Use as claimed in claim 9, for dyeing or printing hydroxyl- and/or carboxamido-containing fiber material.

11. A process for dyeing (including printing) hydroxyl- and/or carboxamido-containing material, in particular fiber material, in which a dye is brought onto or into the material and fixed by means of heat and/or by means of an acid-binding agent, which comprises using as the dye a compound of the formula (1) mentioned and defined in claim 1.